# EUROPEAN PATENT SPECIFICATION

(11) **EP 1 808 607 B1**
(45) Date of publication and mention of the grant of the patent: **15.09.2010**
(21) Application number: 05765758.7
(22) Date of filing: 14.07.2005
(51) Int. Cl.: F16C 9/02, F02F 7/00, F16C 35/02

(54) **JOURNAL BEARING STRUCTURE FOR CRANKSHAFT**
ZAPFENLAGERSTRUKTUR FÜR KURBELWELLE
STRUCTURE DE PALIER DE PORTEE D'ARBRE POUR UN VILEBREQUIN

(30) Priority: 31.08.2004 JP 2004251263
(43) Date of publication of application: 18.07.2007
(73) Proprietor: Isuzu Motors Limited, Tokyo 140-8722 (JP)
(72) Inventor: FUJISAWA, Hideo, Isuzu Motors Limited, Fujisawa-shi Kanagawa 2528501 (JP)
(74) Representative: Schaumburg, Thoenes, Thurn, Landskron, Eckert
(86) International application number: PCT/JP2005/013022
(87) International publication number: WO 2006/025157

(56) References cited:
- EP-A- 1 217 234
- WO-A-00/60216
- GB-A- 1 603 957
- JP-A- 8 061 378
- JP-A- 2003 041 302
- JP-U- 1 136 715
- JP-U- 3 062 216
- JP-U- 63 132 113
- US-B1- 6 471 406

## Description

### TECHNICAL FIELD

The present invention relates to a crankshaft journal bearing structure, and more particularly to a crankshaft journal bearing structure in which the occurrence of cracks in a cylinder block can be prevented.

### BACKGROUND ART

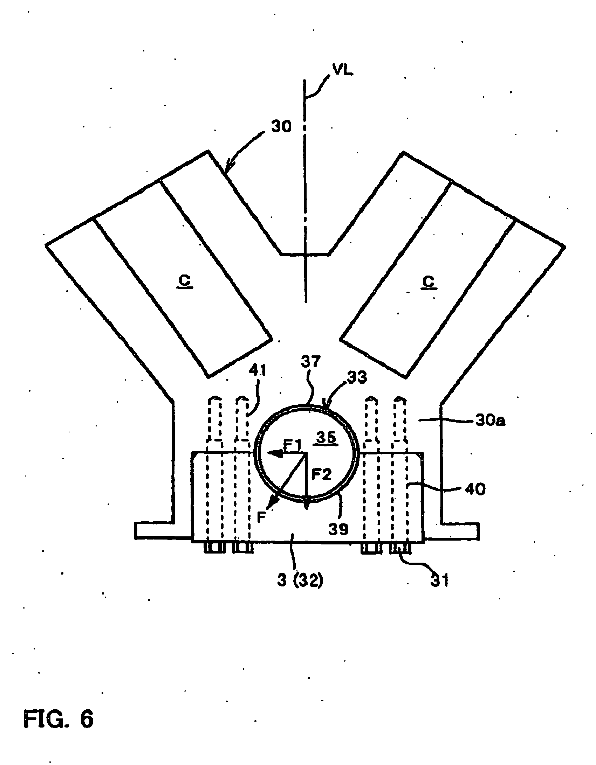

A structure shown in FIG. 6 is conventionally known as a bearing structure for supporting pivotally an engine crankshaft journal.

This bearing structure comprises a journal 35 of a crankshaft 33 provided between and supported pivotally by a bearing main body 30a formed in the lower part of a cylinder block 30 of the engine and a bearing cap 32 fastened by bolts 31 to the lower face of the bearing main body 30a. A bearing metal not shown in the drawing is interposed between the journal 35 and the bearing main body 30a and the bearing cap 32 respectively.

In an engine comprising such a bearing structure, while the reciprocal motion of pistons (not shown in the drawing) produced by combustion pressure within combustion chambers of cylinders C is converted to a torque of the crankshaft 33 by way of a conrod (not shown in the drawings), not all of the combustion pressure of the combustion chambers is converted to a torque and some of the combustion pressure is loaded on the crankshaft 33. The combustion pressure loaded on the crankshaft 33 is transferred to the bearing main body 30a of the cylinder block 30 by way of the bearing cap 32 and the bolts 31 and, in the end, this results in the crankshaft main body 30a being subjected to a combustion pressure reactive force.

Cited reference 1: Japanese Utility Model Application No. S62-102019

### DISCLOSURE OF INVENTION

### PROBLEM TO BE SOLVED BY THE INVENTION

The load acting on the crankshaft 33 has been increasing in recent years accompanying the development of high power engines which, as a result, has led to cases of excessive load being imparted to the bearing main body 30a of the cylinder block 30 and the subsequent occurrence of cracks.

This is described below in detail.

Some of the load that acts on the crankshaft 33 produced by combustion pressure act as a force that pushes the crankshaft 33 in the lateral direction of the cylinder block 30. For example, in the V-type engine as shown in FIG. 6, because a load F acting on the crankshaft 33 is inclined to a perpendicular line VL of the cylinder block 30, a component force F1 that pushes the crankshaft 33 in the lateral direction is made comparatively enlarged (the drawing shows a force generated by the combustion pressure in the left-side cylinder C). Here, the "lateral direction" described in both the specification and the claims appended thereto denotes the direction orthogonal to the axis center of the crankshaft 33 and the axis center of the bolts 31 (left-to-right direction in FIG. 6), while the "longitudinal direction" denotes the direction parallel to the axis center of the crankshaft 33 (front-to-rear direction through the page of FIG. 6). :

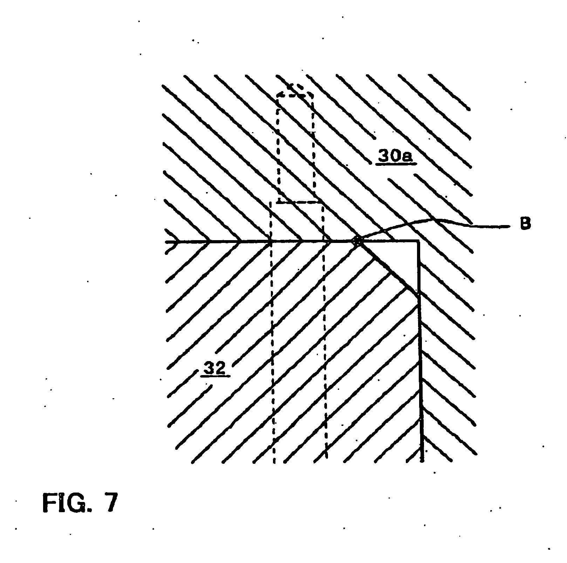

When the force F1 that moves (pushes) the crankshaft 33 in the lateral direction is transferred to the bearing main body 30a of the cylinder block 30 by way of the bearing cap 32 and the bolts 31, a tension generated by the component force F1 acts only on the area of the lower face of the bearing main body 30a that contacts with the bearing cap 32. In other words, only the area of the lower face of the bearing main body 30a that has contact with the bearing cap 32 is pulled in the same direction as the component force F1. As a result, as shown in FIG. 7, a large tensile stress is generated on a boundary line of tension on the lower face of the bearing main body 30a, that is to say, on a coupling line B of the outer-side end in the lateral direction of the upper face (coupling face) of the bearing cap 32 which produces cracks in an area B.

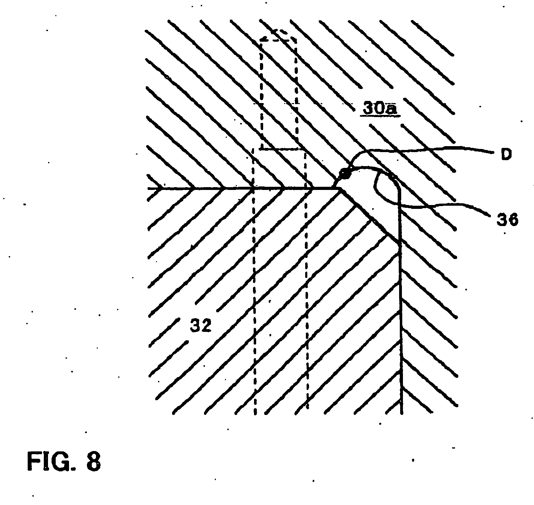

As shown in FIG. 8, a bearing structure is also known in which a recess 36 is formed in the outer-side end in the lateral direction of the lower face of the bearing main body 30a to prevent direct contact between the outer-side end of the upper face of the bearing cap 32 and the lower face of the bearing main body 30a (see cited reference 1).

In this structure, the absence of a concentration of stress as described above is thought to lie in the elimination of the boundary line of tension on the lower face of the bearing main body 30a. However, a range of tests carried out by the inventor of the present invention employing this bearing structure revealed a concentration of stress on a part D of the inner face of the recess 36 and the occurrence of cracks in this area D.

Thereupon, an object of the present invention lies in the provision of a crankshaft journal bearing structure in which, resolving the above described problems, the occurrence of cracks in the cylinder block can be prevented.

### MEANS FOR SOLVING THE PROBLEMS

The present invention to achieve the above objective constitutes a crankshaft journal bearing structure according to claim 1.

Recesses and projections may provide a plurality of grooves that extend in the lateral direction in the longitudinal direction at an outer-side end in the lateral direction of a coupling face of a bearing cap.

In addition, the cylinder block and the bearing cap may be the ones used in an engine in which the center of the piston support and the axis center of a crankshaft are offset in the lateral direction of the engine.

### ADVANTAGES OF THE INVENTION

According to the present invention, the following effects may be obtained.

1) Because a coupling line (boundary line of tension) of the cylinder block with the outer-side end of the bearing cap describes a shape in which recesses and projections are formed in the lateral direction, tensile stress generated in the cylinder block can be dispersed in the lateral direction and, accordingly, the occurrence of cracks can be prevented.

2) Because a coupling line (boundary line of tension) of the cylinder block with the outer-side end of the bearing cap is longer than its conventional counterpart, tensile stress generated in the cylinder block can be dispersed and reduced and, accordingly, the occurrence of cracks can be prevented.

### BEST MODE FOR CARRYING OUT THE INVENTION

A preferred embodiment of the present invention will be hereinafter described in detail with reference to the drawings.

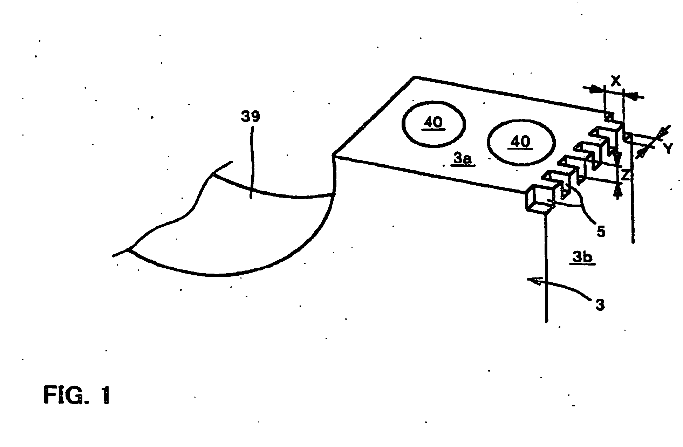

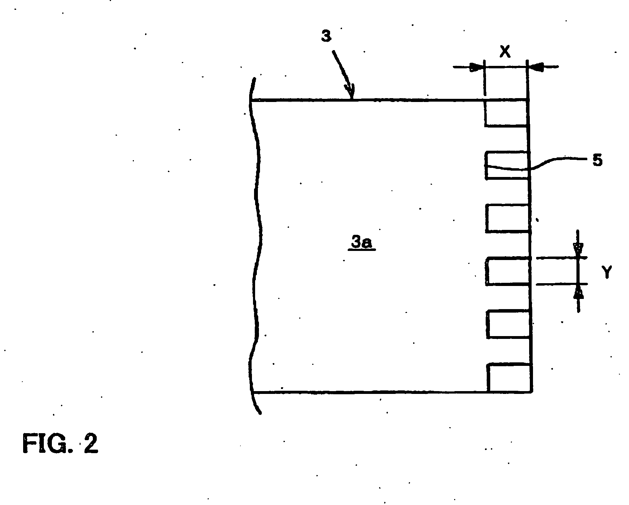

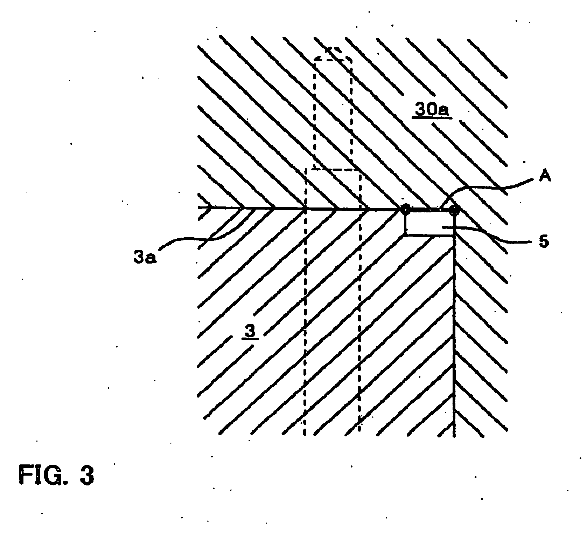

FIG. 1 is a partial perspective view of a bearing cap of a crankshaft journal bearing structure of the embodiment of the present invention; FIG. 2 is a top view of the outer-side end in the lateral direction of the bearing cap; and FIG. 3 is a partial front cross-sectional view showing a coupling part between the outer-side end in the lateral direction of the bearing cap and a cylinder block.

The fundamental configuration of the crankshaft journal bearing structure (hereinafter referred to as the journal structure) of this embodiment is identical to that shown in FIG. 6. That is to say, the bearing structure of this embodiment comprises a bearing main body 30a formed in the lower part of a cylinder block 30 of an engine, and a bearing cap 3 attached to the lower part of the bearing main body 30a with the bolts 31.

Semicircular-shaped recesses 37, 39 for housing a journal 35 of a crankshaft 33 are provided in the lower face of the bearing main body 30a of the cylinder block 30 and the upper face of the bearing cap 3 respectively, and bearing metals not shown in the drawing are fitted to the inner face of the recesses 37, 39.

The bearing cap 3 is inserted from the lower side of the cylinder block 30 in a state in which the journal 35 of a crankshaft 33 is housed in the recess 37 of the lower face of the bearing main body 30a and the upper face of the bearing cap 3 is made to touch the lower face of the bearing main body 30a. The cylinder block 30 and the bearing cap 3 can be integrally fixed and the journal 35 of the crankshaft 33 supported pivotally therebetween by inserting bolts 31 in a plurality of bolt insert holes 40 formed in the bearing cap 3 and screwing the tip-end part of the bolts 31 in screw holes 41 formed in the lower face of the bearing main body 30a.

As shown in FIGS. 1 and 2, a characterizing feature of the bearing structure of this embodiment is the forming of the outer-side end in the lateral direction (line through which the upper face 3a and side face 3b intersect) of the upper face 3a (in other words, the coupling face with the lower face of the bearing main body 30a) of the bearing cap 3 in a shape comprising recesses and projections in the lateral direction.

More specifically, a plurality of grooves 5 are provided in the longitudinal direction in the upper face 3a of the bearing cap 3 of this embodiment to extend from the outer-side end in the lateral direction to the inner side in the lateral direction thereof and, by virtue of this, the outer-side end in the lateral direction of the upper face 3a describes a shape comprising recesses and projections. While the drawing shows only one end side in the lateral direction of the bearing cap 3, grooves 5 identical thereto are also formed in the other end side not shown in the drawing.

In this embodiment, the grooves 5 describe a rectangular shape defined by an extending distance X inward in the lateral direction, an extending distance Y in the longitudinal direction, and depth Z. The intervals between the grooves 5 in this embodiment are set to be essentially equivalent to the extending distance Y in the longitudinal direction of the grooves 5. The specific dimensions, the intervals and the number and the like of the grooves 5 are set, as appropriate, in accordance with the characteristics and the likeof the engine.

Naturally, in the bearing structure of this embodiment comprising a bearing cap 3 in which the outer side end in the lateral direction of the upper face 3a is formed to comprise recesses and projections in this way, a coupling line A (see FIG. 3) of the lower face of the bearing main body 30a of the cylinder block 30 with the outer-side end in the lateral direction of the bearing cap 3 also describes a shape comprising recesses and projections of the same shape as the grooves 5. In other words, the position of the lower face of the bearing main body 30a that is in contact with the end of the bearing cap 3 differs in accordance with the position in the longitudinal direction.

The action of the bearing structure of this embodiment will be hereinafter described.

When the combustion pressure within the combustion chamber of the cylinders C of an engine acts on the crankshaft 33, a component pressure F1 (see FIG. 6) that pushes the bearing cap 3 and the bolts 31 in the lateral direction is generated, and the tension generated by the component force F1 acts only on the area of the lower face of the bearing main body 30a that, due to the component force F1, is in contact with the bearing cap 3. In other words, only the part of the lower face of the bearing main body 30a that is in contact with the bearing cap 3 is pulled in the same direction as the component force F1. At this time, because the coupling line A (See FIG. 3) of the lower face of the bearing main body 30a with the outer-side end in the lateral direction of the upper face 3a of the bearing cap 3 describes a shape comprising recesses and projections in the lateral direction, the boundary line of tension generated in the lower face of the bearing main body 30a is also formed in a shape comprising recesses and projections. As a result, the position of generation of tensile stress in the lower face of the bearing main body 30a is dispersed in the lateral direction.

That is to say, while, in a conventional bearing structure, a concentration of tensile stress on one point in the lateral direction of the lower face of the bearing main body 30a occurs because the outer-side end in the lateral direction of the bearing cap 32 defines a straight line, the outer-side end of the upper face 3a of the bearing cap 3 in the bearing structure of this embodiment is a shape comprising recesses and projections and, as a result, the position of generation of tensile stress can be dispersed in the lateral direction. By virtue of this, high stress concentration can be avoided and, accordingly, the occurrence of cracks can be prevented.

In addition, because the outer-side end in the lateral direction of the upper face 3a of the bearing cap 3 describes a shape comprising recesses and projections in the bearing structure of this embodiment, the total length of the coupling line A (boundary line of tension) of the lower face of the bearing main body 30a with the outer side end in the lateral direction of the bearing cap 3 is longer than its conventional counterpart (FIG. 7B). As a result, the tension generated in the lower face of the bearing main body 30a can be dispersed and reduced and, accordingly, the occurrence of cracks can be prevented even better.

The present invention is not limited to the above described embodiment.

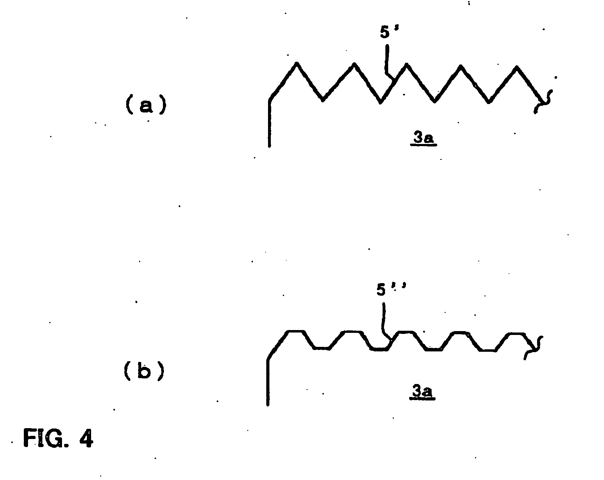

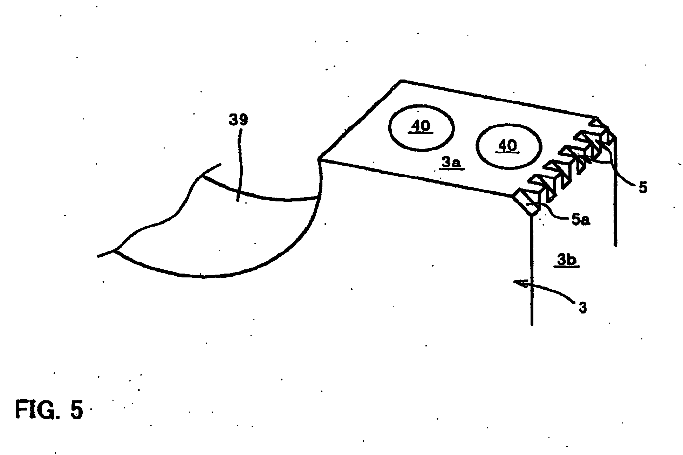

For example, the shape of the grooves 5 denotes one example thereof and is not intended to limit the present invention. In other words, the objective to form the grooves 5 is to disperse the outer-side end in the lateral direction of the bearing cap 3 in the lateral direction and to increase the total length of the outer-side end in the lateral direction and, therefore, as shown in FIG. 4(a), grooves 5' of a triangular shape or, as shown in FIG. 4(b), grooves 5" of a trapezoid shape may be used. As another objective to form the grooves 5 is to afford the formation of the upper face 3a of the bearing cap 3 in a shape comprising recesses and projections, the bottom face of the grooves 5 can be in any shape. For example, identical effects to those of the embodiment of FIG. 1 can be obtained even when the bottom face 5a of the grooves 5 is obliquely formed as shown in FIG. 5.

In addition, while the above described embodiment outlines an example of the application to the bearing structure of a V-type engine, the present invention is not limited thereto and can be applied in all types of engines. For example, as the component force F1 (see FIG. 6) acts stronger in the lateral direction on the crankshaft of an engine in which the center of the piston support (in other words the center of the cylinder bore) and the axis center of the crankshaft are offset in the lateral direction, the application of the present invention is also effective in this kind of engine.

### BRIEF DESCRIPTION OF THE DRAWINGS

FIG. 1 is a partial perspective view of a bearing cap of a crankshaft journal bearing structure pertaining to one embodiment of the present invention;
FIG. 2 is a top view of the outer-side end in the lateral direction of the bearing cap of the bearing structure of FIG. 1;
FIG. 3 is a partial front cross-sectional view showing a coupling part between the outer-side end in the lateral direction of the bearing cap and a cylinder block;
FIG. 4 is a top view of modified examples of grooves formed in the bearing cap;
FIG. 5 is a partial perspective view of a bearing cap of a crankshaft journal bearing structure pertaining to another embodiment of the present invention;
FIG. 6 is a schematic front view of a crankshaft journal bearing structure;
FIG. 7 is a partial expanded cross-sectional view for explaining the location of the occurrence of cracks in a cylinder block of a conventional bearing structure; and
FIG. 8 is a partial expanded cross-sectional view for explaining the location of the occurrence of cracks in a cylinder block of a conventional bearing structure.

### Explanation of Symbols

- 3: Bearing cap
- 3a: Upper face (coupling face)
- 5: Grooves
- 30: Cylinder block
- 35: Journal
- 37: Crankshaft

## Claims

1. A crankshaft journal bearing structure in which a journal (35) of a crankshaft (33) is held between and supported pivotally by a cylinder block (30) and a bearing cap (3), **characterized in that** a shape comprising recesses and projections is formed at an upper edge of the lateral direction outer-side side-face (3b) of said bearing cap (3) which fits into said cylinder block (30) and which side-face (3b) is generally flat .

2. The crankshaft journal bearing structure of claim 1, the recesses and projections providing a plurality of grooves (5) extending in the lateral direction in longitudinal direction at an outer-side end in said lateral direction of a coupling face of said bearing cap (3) with said cylinder block (30).

3. The crankshaft journal bearing structure of claim 1 or claim 2, **characterized in that** said cylinder block (30) and said bearing cap (3) are intended to be used in an engine in which the center of a piston support and an axis center of a crankshaft (33) are offset in the lateral direction of the engine.

## Patentansprüche

1. Zapfenlagerstruktur für eine Kurbelwelle, in der ein Zapfen (35) einer Kurbelwelle (33) zwischen einem Zylinderblock (30) und einem Lagerdeckel (3) gehalten und durch diese schwenkbar gelagert ist, **dadurch gekennzeichnet, dass** eine Form mit Vertiefungen und Vorsprüngen an einer Oberkante der in Querrichtung verlaufenden außenseitigen Seitenfläche (3b) des Lagerdeckels (3) ausgebildet ist, die in den Zylinderblock (30) passt, wobei die Seitenfläche (3b) im Wesentlichen flach ist.

2. Zapfenlagerstruktur für eine Kurbelwelle nach Anspruch 1, wobei die Vertiefungen und Vorsprünge eine Vielzahl von sich in Querrichtung erstreckenden Nuten (5) in Längsrichtung an einem außenseitigen Ende in der Querrichtung einer Kupplungsfläche des Lagerdeckels (3) mit dem Zylinderblock (30) vorsehen.

3. Zapfenlagerstruktur für eine Kurbelwelle nach Anspruch 1 oder Anspruch 2, **dadurch gekennzeichnet, dass** der Zylinderblock (30) und der Lagerdeckel (3) dafür bestimmt sind, in einem Motor verwendet zu werden, in dem die Mitte eines Kolbenträgers und eine Achsmitte einer Kurbelwelle (33) in Querrichtung des Motors versetzt sind.

## Revendications

1. Structure de palier de tourillon de vilebrequin dans laquelle un tourillon (35) d'un vilebrequin (33) est maintenu entre, et supporté pour pivoter par, un bloc de culasse (30) et un chapeau de palier (3), **caractérisée en ce qu'**une forme comprenant des creux et des protubérances est formée au niveau d'un bord supérieur de la face latérale (3b) du côté extérieur dans la direction latérale dudit chapeau de palier (3) qui s'ajuste dans ledit bloc de culasse (30), et ladite face latérale (3b) est généralement plate.

2. Structure de palier de tourillon de vilebrequin selon la revendication 1, dans laquelle les creux et les protubérances fournissent une pluralité de rainures (5) qui s'étendent dans la direction latérale en direction longitudinale au niveau d'une extrémité du côté extérieur dans ladite direction latérale d'une face de jonction dudit chapeau de palier (3) avec ledit bloc de culasse (30).

3. Structure de palier de tourillon de vilebrequin selon la revendication 1 ou la revendication 2, **caractérisée en ce que** ledit bloc de culasse (30) et ledit chapeau de palier (3) sont destinés à être utilisés dans un moteur dans lequel le centre d'un support de piston et un centre d'axe d'un vilebrequin (33) sont décalés dans la direction latérale du moteur.
